(19) **Europäisches Patentamt**
**European Patent Office**
**Office européen des brevets**

(11) **EP 2 424 105 B1**

(12) **EUROPEAN PATENT SPECIFICATION**

(45) Date of publication and mention
of the grant of the patent:
**24.07.2019 Bulletin 2019/30**

(51) Int Cl.:
*H02P 21/04* *(2006.01)* *H02P 21/14* *(2016.01)*
*H02P 6/18* *(2016.01)*

(21) Application number: **11178157.1**

(22) Date of filing: **19.08.2011**

(54) **Vector control apparatus and motor control system**

Vektorsteuerungsvorrichtung und Motorsteuerungssystem

Appareil de contrôle de vecteur et système de contrôle de moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2010 JP 2010193969**

(43) Date of publication of application:
**29.02.2012 Bulletin 2012/09**

(73) Proprietor: **Hitachi Industrial Equipment Systems Co., Ltd.**
**Tokyo 101-0022 (JP)**

(72) Inventors:
• **Arakawa, Yoichiro**
**Tokyo, 100-8220 (JP)**

• **Kaneko, Daigo**
**Tokyo, 100-8220 (JP)**
• **Iwaji, Yoshitaka**
**Tokyo, 100-8220 (JP)**
• **Onuma, Yusaku**
**Chiba, 275-8611 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A2- 2 086 106** **JP-A- 2001 286 198**
**US-A1- 2007 046 249**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a vector control apparatus and a motor control system that controls a motor, based on a high-frequency current generated by superimposing a high-frequency voltage.

Description of the Related Art

As a motor drive device for a drive system of an AC (Alternating Current) motor, such as a synchronous motor, an induction motor, or the like, a power conversion device represented by an inverter is often used.

A power conversion device for driving a motor, which requires high performance, needs to detect control information on the rotor of the motor, such as the position and the rotation speed of the rotor. Power conversion devices in recent years use a method that performs accurate estimation of a control amount from information on a back EMF (Electromotive Force) generated in a motor, instead of fitting a position sensor, a speed detector, or the like to the motor to actually measure the rotation angle. However, it is difficult to apply a method that performs estimation of a control amount from information on the back EMF, because the back EMF becomes absolutely low in the vicinity of an extremely low speed.

In this situation, as a method of estimating a control amount at a low speed, there is a method that uses the saliency or the magnetic saturation characteristic of a motor.

The technology disclosed by JP 3312472 B2 particularly uses the saliency of a PM (Permanent Magnet) Synchronous Motor to estimate the magnetic pole position. This technology generates an alternating magnetic field along the magnetic-excitation axis (dc-axis) of a motor; detects a pulsation current (or voltage) of an estimated torque axis (qc-axis) component orthogonal to dc-axis; and based on the result of the detection, performs estimation computation of the magnetic pole position inside the motor. In the case where there is an error between the real magnetic pole axis and the estimated magnetic pole axis, this technology uses the characteristic that an interference term of inductance is present from dc-axis to qc-axis.

This technology detects a change in the high-frequency current or voltage that is generated by superimposing a high-frequency voltage or current to a motor to sequentially measure the inductance, and thereby estimates the phase of secondary magnet flux as a control amount.

The technology disclosed by JP 2002-078392 A performs estimation computation of a magnetic pole position, using the magnetic saturation characteristic of a motor, and performs estimation computation, based on the magnitude of a current that is generated by applying a voltage in a certain direction to the motor.

These technologies enables accurate estimation of information on the operation of a motor without using a sensor, and accordingly saves the cost of a sensor and a cable and the work load of installation. Further, it is possible to reduce noises due to an error in fitting a sensor and environment, and to reduce inappropriate behavior of motor drive due to failure or the like.

The technology disclosed by JP 3312472 B2 detects the axis deviation amount $\Delta\theta$ between dc-axis and d-axis, based on the qc-axis component of a high-frequency current generated by an alternating voltage superimposed with respect to dc-axis. In a synchronous motor, due to the saliency of inductance, described later, the component in the orthogonal direction to the voltage superimposition direction of the above-described current tends to be proportional to $\sin 2\Delta\theta$ for an axis deviation amount of $\Delta\theta$. Accordingly, if $\Delta\theta$ is small, $\sin \Delta\theta = \Delta\theta$ is satisfied, and it is thus possible to estimate the axis deviation amount $\Delta\theta$ with a certain accuracy.

However, if a rapid (transient) increase in the axis deviation amount $\Delta\theta$ is generated by brake, shock disturbance, or the like, then approximation of $\sin \Delta\theta = \Delta\theta$ comes to be unsatisfied. In this case, despite that the axis deviation amount $\Delta\theta$ increases, the estimation amount of the axis deviation amount $\Delta\theta$ by high-frequency superimposition is observed to decrease. Accordingly, the estimated error increases, the response becomes smaller than a designed value, and finally, a problem is caused that the motor steps out.

Further, the technology disclosed by JP 2002-078392 A is a method that estimates a phase deviation (axis deviation amount $\Delta\theta$), using the saturation characteristic of inductance. However, the saturation characteristic of inductance obtained by high-frequency superimposing is a non-linear characteristic, and is hard to be modeled by a function, such as a sine wave, unlike the case of the saliency. Thus, it is impossible to accurately estimate a transient axis error, and the same problem is caused.

A motor control device is known from US 2007/046249 A1 that includes an estimator for estimating a rotor position of a motor having a salient pole by using a value corresponding to a q-axis inductance of the motor as an operation parameter where an estimated axes for the control corresponding to d-q axes are gamma-delta axes, and a controller for controlling the motor based on the estimated rotor position.

A motor controller for driving a brushless motor without using sensors and a vehicular steering system using said motor controller are known from EP 2 086 106 A2.

Further, a method of estimating position of magnetic flux in induction motor and its control device are known from JP 2001-286198 A to detect magnetic flux position of the motor.

In this situation, an object of the present invention is to provide a vector control apparatus, for driving an AC motor, capable of accurately estimating a magnetic pole position even with a transient increase in the axis deviation amount due to shock disturbance or the like.

## SUMMARY OF THE INVENTION

In order to solve the above-described problems, the present invention provides a vector control apparatus according to claim 1 that performs vector control by controlling a magnetic-excitation axis voltage (Vdc*) and a torque axis voltage (Vqc*) orthogonal to the magnetic-excitation axis so that a magnetic-excitation axis component (Idc) and a current component (Iqc) orthogonal to the magnetic-excitation axis of a motor current, namely a torque axis component of a motor current, which flows in an alternating current motor become target values, the apparatus including: an alternating voltage superimposing unit (6) that superimposes an alternating voltage with a frequency that is different from a frequency of the motor current, resolving the alternating voltage into a component of the magnetic-excitation axis voltage and a component of the torque axis voltage; a high-frequency current phase-difference computing unit (7) that, having a reference phase of the alternating voltage be a superimposing axis (p-axis), resolves a high-frequency current generated by the alternating voltage into a magnetic-excitation axis component ($\Delta$Idc) and a current component ($\Delta$Iqc) orthogonal to this magnetic-excitation axis, subtracts a phase difference ($\theta$pdc or $\theta$p) between the superimposing axis and the magnetic-excitation axis from a phase (arctan ($\Delta$Iqc/$\Delta$Idc) or arctan ($\Delta$Ibc/$\Delta$Iac)) of the high-frequency current with respect to the magnetic-excitation axis, and thereby computes an axis-error reference amount (X$\theta$pd) that is based on a phase difference ($\theta$ivh) between the high-frequency current generated in the motor current by the alternating voltage and the alternating voltage; a superimposing axis adjusting unit (8) that adjusts a phase direction ($\theta$p) of the superimposing axis by proportional integration of a deviation between the axis-error reference amount (X$\theta$pd) and a target value (X$\theta$pd0) so that the axis-error reference amount (X$\theta$pd) becomes zero or a predetermined target value; an axis deviation amount computing unit (9) that computes an axis deviation amount ($\Delta\theta$c) between the superimposing axis (p-axis) whose direction has been adjusted by the superimposing axis adjusting unit and the magnetic-excitation axis (dc-axis); and a magnetic-excitation axis adjusting unit (10) that adjusts a phase direction of the magnetic-excitation axis (dc-axis) by a proportional integration of a deviation between the axis deviation amount ($\Delta\theta$c) and a target value ($\Delta\theta$c0) so that the axis deviation amount ($\Delta\theta$c) becomes zero or a predetermined

target value. Incidentally, the character and the symbols in parentheses are described as examples.

## BRIEF DESCRIPTION OF THE DRAWINGS

FIG. 1 is a diagram of the configuration of a motor control system of a first embodiment according to the present invention;
FIG. 2 is an illustration related to respective coordinate systems and symbols used in the first embodiment according to the present invention;
FIG. 3 is a block diagram of an alternating voltage generating unit;
FIG. 4 is a block diagram of an axis-error reference amount computing unit;
FIG. 5 is a block diagram of a superimposing phase adjusting unit;
FIG. 6 is a block diagram of an axis deviation amount computing unit;
FIG. 7 is a block diagram of a magnetic-excitation phase adjusting unit;
FIG. 8 is an illustration of the characteristic of an axis-error reference amount;
FIG. 9 is a diagram of the configuration of a motor control system of a comparative example;
FIG. 10 is a diagram of the configuration of a motor control system of a second embodiment according to the present invention;
FIG. 11 is a block diagram of a magnetic-excitation phase switching adjusting unit of the second embodiment according to the present invention;
FIG. 12 is an illustration of an acceleration/deceleration sequence in the second embodiment according to the present invention;
FIG. 13 is a diagram of the configuration of a motor control system of a third embodiment according to the present invention;

FIG. 14 is an illustration of the characteristic of an axis-error reference amount during a high load, for explanation of a fourth embodiment according to the present invention;

FIG. 15 is a block diagram in a sixth embodiment according to the present invention;

FIG. 16 is a block diagram of an alternating voltage generating unit in the sixth embodiment according to the present invention; and

FIG. 17 is a block diagram of an axis-error reference amount computing unit in the sixth embodiment according to the present invention.

DETAILED DESCRIPTION OF THE PREFERRED EMBODIMENTS

Embodiments (hereinafter, each referred to as "this embodiment") according to the present invention will be described below in detail with reference to the drawings. In the respective figures, the same symbols will be assigned to common elements or similar elements, and overlapping description of them will be omitted.

(First Embodiment)

An embodiment according to the present invention will be described below in detail with reference to drawings.

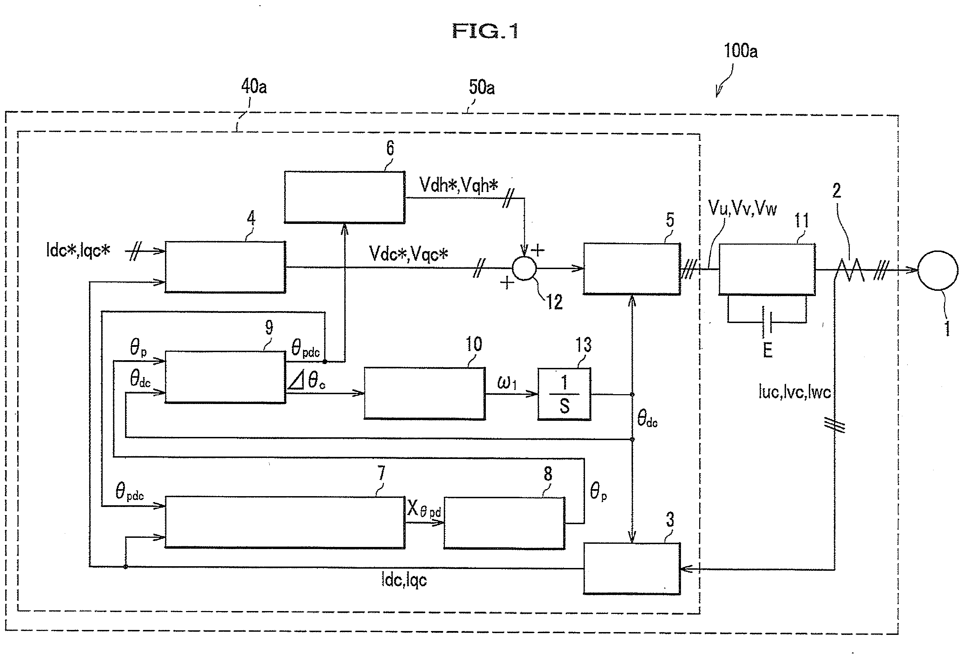

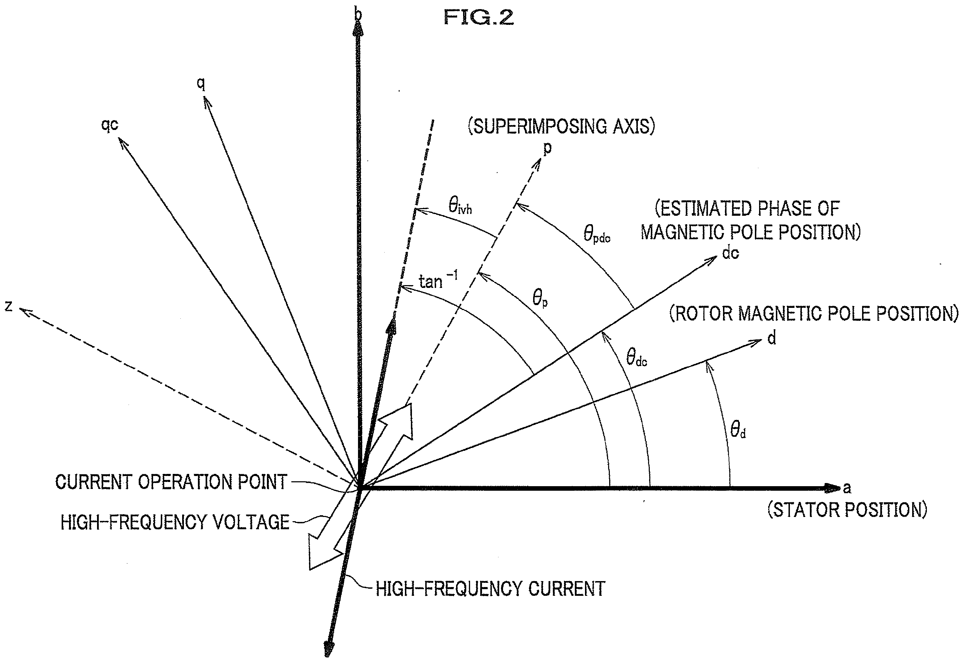

FIG. 1 is a diagram of the configuration of a motor control system of a first embodiment according to the present invention. FIG. 2 is a diagram showing the definitions of coordinate systems and symbols used for motor control.

In FIG. 1, a motor control system 100 includes a power conversion device 50 and a motor 1, wherein the power conversion device 50 (50a) includes a motor control apparatus 40 (40a), a power convertor 11, and a current detecting unit 2.

The current detecting unit 2 detects three-phase currents Iu, Iv, Iw which flow in the motor 1, and outputs three-phase current signals Iuc, Ivs, Iwc. Based on three-phase instruction voltages Vu, Vv, and Vw generated by the motor control apparatus 40, the power convertor 11 converts the direct-current power of a direct-current power source E into a three-phase alternating-current power, and supplies the three-phase alternating-current power to the motor 1.

The motor 1 is a three-phase synchronous motor, and is, though not shown, configured such that a rotor with a plurality of attached permanent magnets rotates inside a stator.

In FIG. 2, ab-axis is the coordinate system of the stator, and a-axis is in general set with reference to the u-phase wire phase. The dq-axis is the coordinate system of the rotor, and rotates in synchronization with the rotor. In the case of a permanent magnetic synchronous motor, d-axis is in general set with reference to the phase of permanent magnets fitted on the rotator, and is also referred to as a magnetic pole axis. The dc-qc-axis (hereinafter, referred to as dqc-axis) is a coordinate system assumed, by the motor control unit, to be in d-axis direction, and is also referred to as a control axis. An object of the motor control apparatus is to make d-axis (magnetic pole axis) and dc-axis (magnetic-excitation axis) agree with each other.

In FIG. 1, the motor control apparatus 40a includes a coordinate transforming unit 3, a voltage computing unit 4, a coordinate transforming unit 5, an alternating voltage generating unit 6, an axis-error reference amount computing unit 7 as a high-frequency-current phase difference computing unit, a superimposing phase adjusting unit 8, an axis-deviation amount computing unit 9, and a magnetic-excitation phase adjusting unit 10. The motor control apparatus 40a controls currents so that the d-axis current Idc and the q-axis current Iqc agree with the current instruction values Idc* and Iqc*. The, motor control apparatus 40a is configured with a ROM (Read Only Memory), a RAM (Random Access Memory), a CPU (Central Processing Unit), and a program.

The coordinate transforming unit 3 transforms the three-phase current signals Iuc, Ivc, Iwc to the dc-qc axis coordinate system, and outputs current detection values Idc, Iqc. The coordinate transforming unit 5 transforms the voltage instruction values Vdc* and Vqc* into three-phase voltage instructions Vu, Vv, Vw, and outputs them to the power convertor 11. On the other hand, the voltage computing unit 4 receives input of the current instruction values Idc* and Iqc* computed by an upper level system, computes the power instruction values Vdc* and Vqc* so that the current detection values Idc, Iqc agree with the current instruction values Idc*, Iqc*, and outputs a result of the computation.

Herein, the current instruction value Idc* is normally zero, however, it is sometimes set to a value other than zero in the case of a weakened magnetic field or start-up. For example, at start-up, by gradually increasing the current detection value Idc along d-axis, it is possible to fix the rotor at a predetermined rotation position, perform synchronous operation, and thereafter transit into sensorless control.

The basic flow of current control in motor control has been described above. In the above description, it is assumed that dc-axis agrees with d-axis. Accordingly, it is necessary to perform control such as to make dc-axis agree with d-axis (synchronization) in parallel with current control. For synchronization between dc-axis and d-axis, it is necessary to obtain the axis deviation amount between dc-axis and d-axis. A method of obtaining the axis deviation amount by high-frequency superimposing without using a position sensor will be described below.

In the dq coordinate system, the voltages Vd, Vq, the currents Id. Iq, and the magnet fluxes φd, φq of the motor

are represented by Expression 1.

$$\begin{bmatrix} Vd \\ Vq \end{bmatrix} = r \begin{bmatrix} Id \\ Iq \end{bmatrix} + \begin{bmatrix} s & -\omega \\ \omega & s \end{bmatrix} \cdot \begin{bmatrix} \phi d \\ \phi q \end{bmatrix} \qquad \text{Expression 1}$$

Further, neglecting non-linear phenomena, such as magnetic saturation, the relationship between the magnet fluxes φd, φq and the currents Id, Iq is represented by Expression 2. The inductances Ld, Lq are two-phase converted values in the d-axis direction and in the q-axis direction, wherein the above-described saliency represents that the values are different from each other.

$$\begin{bmatrix} \phi d \\ \phi q \end{bmatrix} = \begin{bmatrix} Ld & 0 \\ 0 & Lq \end{bmatrix} \cdot \begin{bmatrix} Id \\ Iq \end{bmatrix} \qquad \text{Expression 2}$$

In Expressions 1 and after, s represents a differential operator, ω represents the rotation speed of the rotator, and r represents the primary resistance value. Herein, in consideration of the high frequency region, assuming that the voltage drop can be sufficiently neglected and further that the rotation speed ω is sufficiently low, Expression 3 can be obtained.

$$\begin{bmatrix} \Delta vd \\ \Delta vq \end{bmatrix} = \frac{d}{dt} \begin{bmatrix} \Delta \phi d \\ \Delta \phi q \end{bmatrix} \qquad \text{Expression 3}$$

The operator $\Delta$ in Expression 3 represents a change by high-frequency superimposing. Taking into account only a change due to high-frequency superimposing, Expression 2 can also be expressed as Expression 4.

$$\begin{bmatrix} \Delta \phi d \\ \Delta \phi q \end{bmatrix} = \begin{bmatrix} Ld & 0 \\ 0 & Lq \end{bmatrix} \cdot \begin{bmatrix} \Delta Id \\ \Delta Iq \end{bmatrix} \qquad \text{Expression 4}$$

From Expression 3 and Expression 4, a high-frequency current that is generated when a high-frequency voltage is applied can be obtained by Expression 5.

$$\begin{bmatrix} \Delta Id \\ \Delta Iq \end{bmatrix} = \begin{bmatrix} Ld & 0 \\ 0 & Lq \end{bmatrix}^{-1} \cdot \begin{bmatrix} \Delta vd \\ \Delta vq \end{bmatrix} \qquad \text{Expression 5}$$

The pz-axis in FIG. 2 is a high-frequency superimposing coordinate system, and it is assumed that, for example, a rectangular-wave alternating voltage is superimposed in p-axis direction. Relationship on pz-axis, namely Expression 6, can be obtained by coordinate-transformation of Expression 5.

$$\begin{bmatrix} \Delta Ip \\ \Delta Iz \end{bmatrix} = R(-\theta pd) \begin{bmatrix} Ld & 0 \\ 0 & Lq \end{bmatrix}^{-1} \cdot R(\theta pd) \begin{bmatrix} \Delta vp \\ \Delta vq \end{bmatrix}$$

$$= \frac{1}{Ld \cdot Lq} \cdot \begin{bmatrix} \dfrac{Ld + Lq}{2} - \dfrac{\cos 2\theta pd}{2}(Ld - Lq) & \dfrac{\sin 2\theta pd}{2}(Ld - Lq) \\ \dfrac{\sin 2\theta}{2}(Ld - Lq) & \dfrac{Ld + Lq}{2} + \dfrac{\cos 2\theta pd}{2}(Ld - Lq) \end{bmatrix} \cdot \begin{bmatrix} \Delta vp \\ \Delta vz \end{bmatrix}$$

Expression 6

Suffixes p, z represent that these values are values converted to pz coordinates. Further, θpd represents the phase of p-axis with respect to d-axis. R (•) in the expression refers to a rotation matrix represented by Expression 7.

$$R(\theta) = \begin{bmatrix} \cos\theta & -\sin\theta \\ \sin\theta & \cos\theta \end{bmatrix}$$  Expression 7

In Expression 6, as the alternating voltage is superimposed only for p-axis, if Δvz=0, Expression 8 can be obtained.

$$\begin{bmatrix} \Delta Ip \\ \Delta Iz \end{bmatrix} = \frac{\Delta vp}{Ld \cdot Lq} \begin{bmatrix} \dfrac{Ld + Lq}{2} - \dfrac{\cos 2\theta pd}{2}(Ld - Lq) \\ \dfrac{\sin 2\theta pd}{2}(Ld - Lq) \end{bmatrix}$$  Expression 8

From Expression 8, it is understood that, if the motor 1 has saliency (Ld≠Lq) and p-axis and d-axis agree (synchronization) with each other (θpd=0), the high-frequency current is on p-axis, and that if the synchronization is lost, the high-frequency current deviates from p-axis.

Accordingly, by observing the difference between the phase of the superimposed alternating voltage and the phase of the generated high-frequency current, it is possible to estimate information on axis error between p-axis and d-axis.

Further, it is understood that, if control is performed such that the phase of the superimposed alternating voltage and the phase of the thereby generated high-frequency current agree with each other, then p-axis and d-axis agree with each other.

In a conventional art, p-axis, which represents the superimposing phase, agrees with dc-axis, or p-axis is made agree with a phase deviated from dc-axis by a certain amount, and dqc-axis synchronizes with pz-axis in any case. On the other hand, this embodiment has a feature that p-axis is controlled independently from dqc-axis.

The superimposing phase adjusting unit 8 and the magnetic-excitation phase adjusting unit 10 accompanying it, which are the most distinctive feature of this embodiment, will be described below.

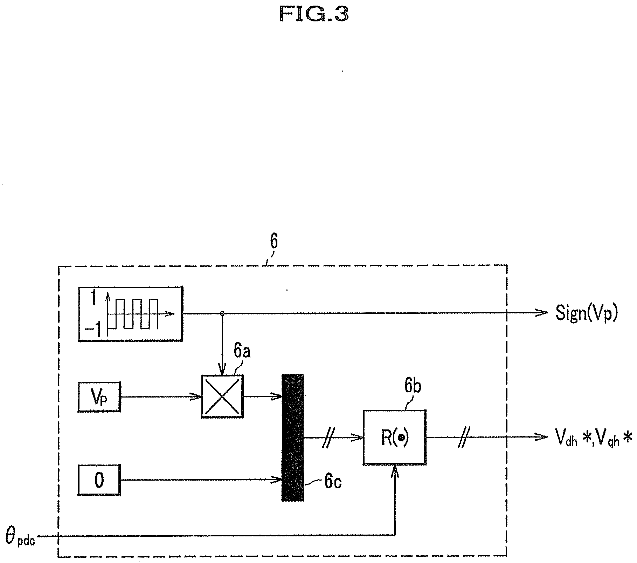

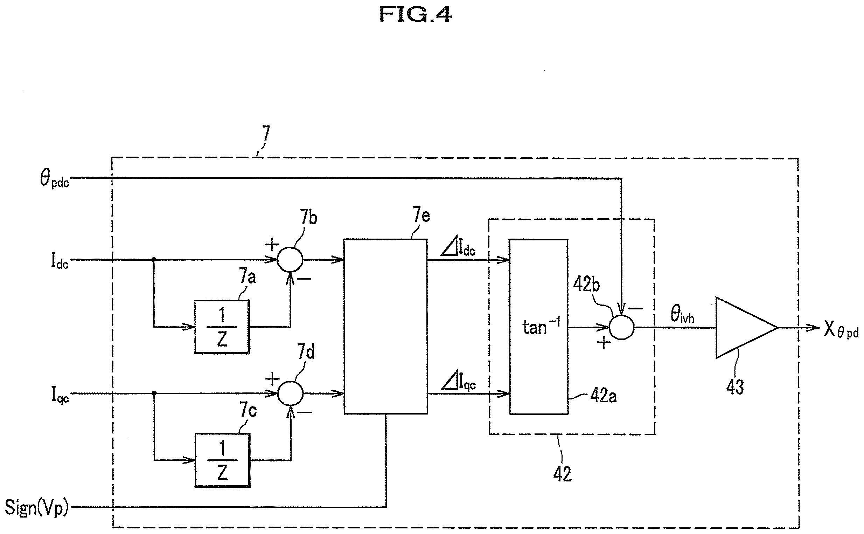

FIG. 3 is a diagram of the configuration of the alternating voltage generating unit 6. FIG. 4 is a diagram of the configuration of the axis-error reference amount computing unit 7. In FIG. 3, the alternating voltage generating unit 6 (FIG. 1) includes a multiplier 6a, a vector computer 6c, and a coordinate transforming unit 6b. The multiplier 6a performs multiplication between a rectangular wave voltage with an amplitude of±1 and an amplitude value of Vp; the vector computer 6c generates a column vector from a rectangular wave voltage in p-axis direction as a result of the multiplication and a value zero; and the coordinate transforming unit 6b generates alternating voltage signals Vdh*, Vqh* by performing coordinate transformation of Expression 7, using θp dc. As the rectangular wave voltage with the amplitude of±1 represents positive and negative signs, it is output as Sign (Vp). The phase θpdc used for the coordinate transformation is the p-axis phase angle with respect to dc-axis. The rectangular wave voltage has an average value of zero, has a frequency higher than that by the design of response in current control of the motor, and accordingly has no effects on the current control system. Then, an adder 12, in FIG. 1, adds the alternating voltage signals Vdh*, Vqh* and the above-described voltage instructions Vdc*, Vqc*.

In FIG. 4, the axis-error reference amount computing unit 7 includes subtracters 7b, 7d, 1/Z phase shifters 7a, 7c, an alternating-voltage sign correcting unit 7e, a high-frequency voltage current phase-difference computing unit 42, and a response adjustment gain 43. The axis-error reference amount computing unit 7 extracts a high-frequency current generated by high-frequency superimposing from the current detection values Idc, Iqc, and outputs an axis-error reference amount Xθpd. Herein, the phase shifters 7a, 7c are function blocks of $Z=e^{sT}$ for a temporal shift by a sampling time T. By synchronizing current detection by the current detecting unit 2, the computation cycle of the axis-error reference amount computing unit 7, and the cycle of the high-frequency alternating voltage, it is possible to appropriately detect the peak value of a generated high-frequency current.

The subtracters 7b, 7d and the phase shifters 7a, 7c take the differences in the current detection values Ids, Iqc for one time lag, and extracts high-frequency current components $\Delta$Idc, $\Delta$Iqc generated by the high-frequency alternating voltage. The alternating voltage sign correcting unit 7e uses a Sign (Vp) signal to compensate the positive or the negative of the alternating voltage. A high-frequency-voltage current phase difference computing unit 42 performs computation according to Expression 9.

$$\theta ivh = \arctan\left(\frac{\Delta Iqc}{\Delta Idc}\right) - \theta pdc \qquad \text{Expression 9}$$

By the computation according to Expression 9, a phase difference $\theta$ivh between the superimposed alternating voltage and the high-frequency current can be obtained. The response adjustment gain 43 applies an appropriate response adjustment gain to the phase difference $\theta$ivh, and outputs a result as the axis-error reference amount Xθpd. Incidentally, in the case where Ld<Lq, $\theta$pdc and $\theta$ivh normally have signs opposite to each other, and negative $\theta$ivh is obtained for positive $\theta$pdc. Accordingly, the response adjustment gain 43 is set to a negative value, and the signs of $\theta$pdc and Xθpd are made agree with each other.

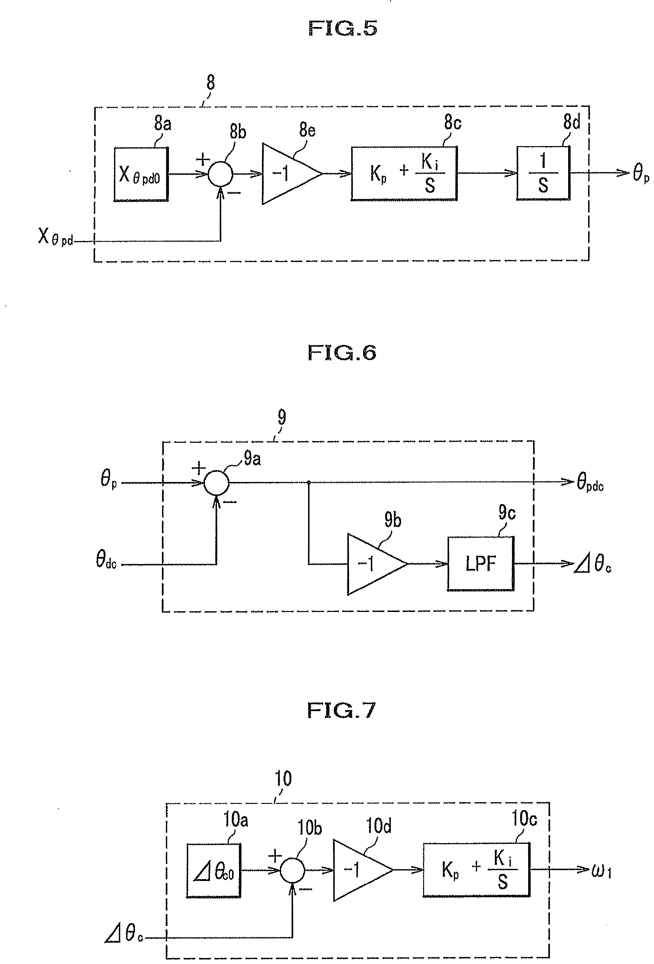

FIG. 5 is a block diagram of the superimposing phase adjusting unit 8.

The superimposing phase adjusting unit 8 includes a target value generator 8a, an adder 8b, a PI controller 8c, an integrator 8d, and a reverser 8e, and operates the p-axis phase so that the axis-error reference amount Xθpd and a target value Xθpd0 agree with each other. In this embodiment, the superimposing phase adjusting unit 8 has this function implemented by PI control. The target value Xθpd0 can be normally zero. The adder 8b computes the deviation between the value of Xθpd having been output by the axis-error reference amount computing unit 7 (FIG. 4) and the target value Xθpd0 having been output by the target value generator 8a. Due to the definition of the axis-error reference amount in FIG. 2, when the deviation having been output by the adder 8b is positive, as the superimposing phase needs to turn negative, the reverser 8e is made to reverse the deviation. The PI controller 8c multiplies the deviation having been output from the reverser 8e by $(K_p+K_I/s)$. The integrator 8d integrates a result of computation by the PI controller 8c, and outputs a p-axis phase $\theta_P$.

The alternating voltage generating unit 6, the axis-error reference amount computing unit 7, and the superimposing phase adjusting unit 8 are in an independent control system that is configured only by the relationship between the voltage superimposing to the p-axis phase and the detected high-frequency voltage current phase difference $\theta$ivh. Accordingly, attention should be paid to that they are configured, independently from the system for synchronization between dc-axis and d-axis and from the current control system computed on the dc-axis phase.

The operation of the magnetic-excitation phase adjusting unit 10, which makes dc-axis agree with d-axis, will be described blow. As discussed with reference to Expression 8, if the gain of the superimposing phase adjusting unit 8 is raised and the independent superimposing axis control system is set for sufficiently high response, it is understood that d-axis and p-axis always agree with each other for the magnetic-excitation phase adjusting unit 10. Accordingly, the p-axis phase $\theta$pdc with respect to dc-axis always represents the phase difference between d-axis and dc-axis.

FIG. 6 is a block diagram of the axis-deviation amount computing unit 9.

Based on this principle, the axis-deviation amount computing unit 9 computes the axis deviation amount $\Delta\theta$c that is the phase difference between d-axis and dc-axis. The axis-deviation amount computing unit 9 includes a subtractor 9a, a reverser 9b, and a low-pass filter (LPF) 9c, and the subtractor 9a subtracts the dc-axis phase $\theta$dc from the p-axis phase $\theta$p to output the signal of $\theta$pdc. Further, the reverser 9b reverses the signal of $\theta$pdc, and outputs the signal of $\Delta\theta$c via the low-pass filter 9c. That is, simply $\Delta\theta$c=- $\theta$pdc.

FIG. 7 is a block diagram of the magnetic-excitation phase adjusting unit 10.

The magnetic-excitation phase adjusting unit 10 includes a target value generator 10a, a subtractor 10b, a PI controller 10c, and a reverser 10d, and outputs an output frequency $\omega_1$ to make the axis-deviation amount $\Delta\theta$c agree with a target value $\Delta\theta$c0. This output frequency $\omega_1$ is integrated by the integrator (FIG. 1), and the magnetic-excitation phase adjusting unit 10 thereby operates the dc-axis phase $\theta$dc. The subtractor 10b subtracts the axis deviation amount $\Delta\theta$c from the target value $\Delta\theta$c0 generated by the target value generator 10a, and the reverser 10d reverses a deviation that is output from the subtractor 10b, taking into account the operation direction of the magnetic-excitation phase adjusting unit 10. The PI controller 10c computes an output of the reverser 10d by proportional integration. The target value $\Delta\theta c0$ can be normally zero.

Advantages of the present invention will be described below.

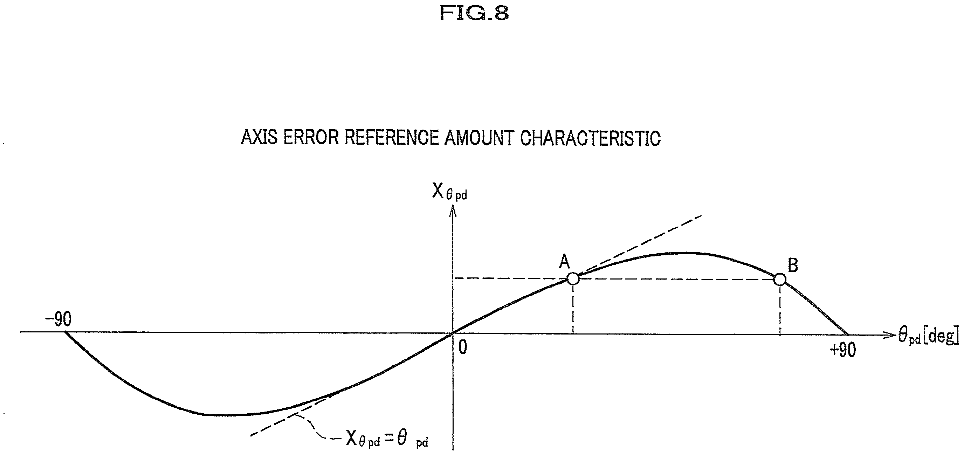

FIG. 8 shows the relationship between the axis-error reference amount $X\theta pd$ defined in this embodiment and the axis error $\theta pd$ between p and d. In the high-frequency superimposing method that uses the saliency of inductance, information on the axis error $\theta pd$ is, as shown in Expression 6, represented by a trigonometric function, such as $\sin 2\theta pd$ and $\cos 2\theta pd$. Accordingly, as shown in FIG. 8, the axis-error reference amount $X\theta pd$ has the characteristic of a sine waveform. Accordingly, when $\theta pd$ becomes large, it becomes impossible to correctly detect the axis error between p and d.

For example, regarding point A and point B in FIG. 8, although the axis errors $\theta pd$ are greatly different, the axis-error reference amounts $X\theta pd$ agree with each other. This causes determination, according to the high-frequency superimposing method, that axis error corresponding to point A is the only axis error, despite that the axis error between p and d takes a value corresponding to point B.

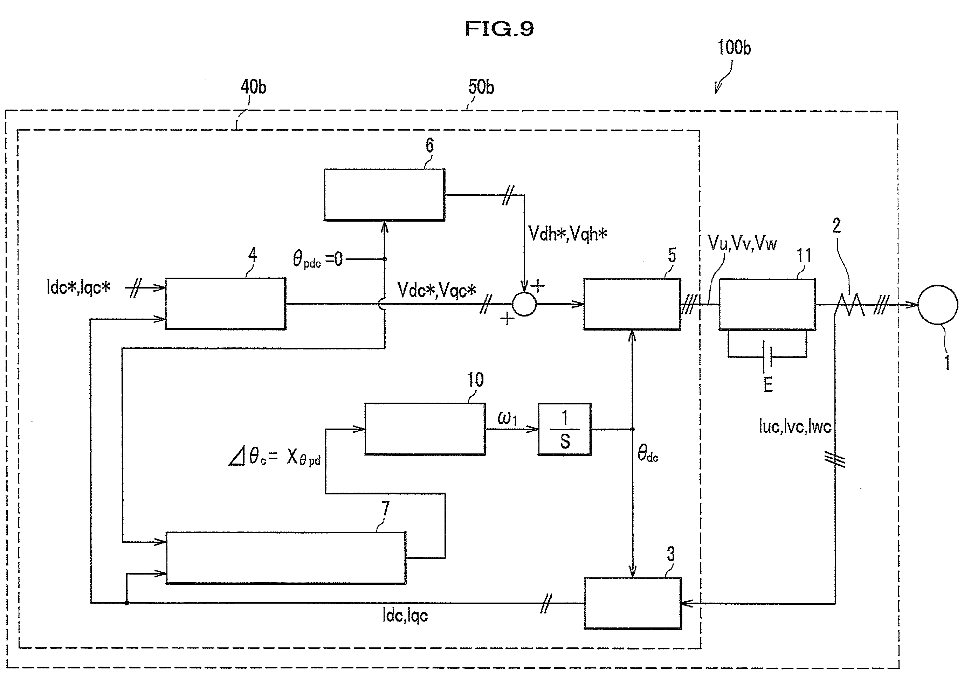

FIG. 9 is a diagram of the configuration of a motor control system of a comparative example. This configuration diagram illustrates a conventional art, using the respective units in the first embodiment.

In comparison with the motor control system 100a (FIG. 1), a motor control system 100b is not provided with the superimposing phase adjusting unit 8 nor the axis-deviation reference amount computing unit 9, and an output signal $X\theta pd$ from the axis-error reference amount computing unit 7 is directly input as $\Delta\theta c$ to the magnetic-excitation phase adjusting unit 10.

Further, in the motor control system 100b, a signal $\theta pdc$ that is input to the alternating voltage generating unit 6 is zero, and the value of zero is input to the axis-error reference amount computing unit 7.

Conventionally, in many cases, a high-frequency voltage has been superimposed on dc-axis ($\theta pdc=0$). In this case, as p-axis and dc-axis agree with each other, $\theta pd = \Delta\theta c$ is satisfied, and accordingly, an output $X\theta pd$ from the axis-error reference amount computing unit 7 is directly input to the magnetic-excitation phase adjusting unit 10.

In this case, if an excessive (rapidly changing) load is applied to a response from the magnetic-excitation phase adjusting unit 10 and the axis deviation amount $\Delta\theta$ ($=\theta pd$) between d-axis and dc-axis increases, the axis deviation amount is estimated to be smaller than a real value, due to the sine wave characteristic of the above-described axis-error reference amount, which causes degradation in the response characteristics, and further can cause the motor to step out. A method of raising the response from the magnetic-excitation phase adjusting unit 10 is a solution, however, as synchronization control between dc-axis and d-axis is related to current control, there may be a case where response cannot be freely designed.

On the other hand, in this embodiment, synchronization control between p-axis and d-axis is arranged independently from the synchronization control between dc-axis and d-axis. Accordingly, response can be freely set, and it is possible to make p-axis and d-axis sufficiently agree with each other, even with an excessive load. At this moment, the magnetic-excitation phase adjusting unit 10 can estimate a correct axis deviation amount through the p-axis phase even with a transient increase in the axis error. Accordingly, it is possible to continue motor control without being affected by the sine wave characteristic of the axis-error reference amount $X\theta pd$.

As has been described above, in this embodiment, synchronization between p-axis and d-axis and synchronization between dc-axis and d-axis are arranged in two, and p-axis is adjusted independently from dc-axis. Thus, it is possible to solve the problem, which is a principle problem with a high-frequency voltage superimposing method that uses the saliency of a motor, namely a problem of an error in estimation of an axis deviation amount caused by the sine wave characteristic of an axis error reference amount. It is thereby possible to continue motor control without stepping out of the motor, even with application of a rapidly changing load or a rapid acceleration or deceleration.

Incidentally, in this embodiment, PI control is implemented as the magnetic-excitation phase adjusting unit 10, however, implementation may be carried out by an observer.

(Second Embodiment)

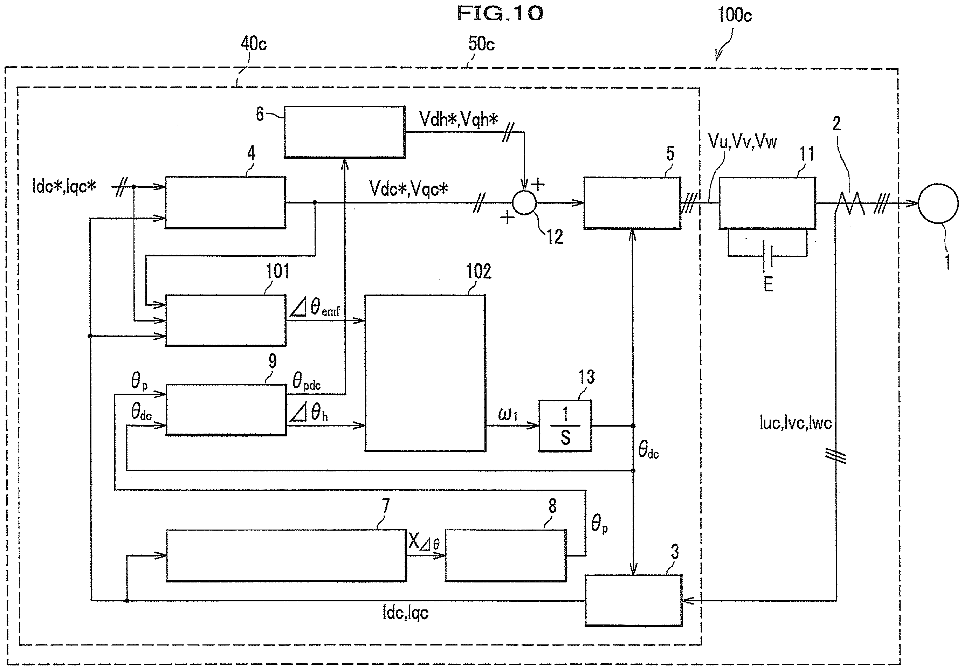

FIG. 10 is a diagram of the configuration of a motor control system of a second embodiment according to the present invention.

In comparison with the configuration in FIG. 1, a motor control system 100c in this embodiment is additionally provided with a second axis-deviation amount computing unit 101 to estimate an axis deviation amount $\Delta\theta$ ($=\theta pd$), based on the induction voltage of a motor 1; and the magnetic-excitation phase adjusting unit 10 is changed to a magnetic-excitation phase switching adjusting unit 102 that is provided with a switching function to select either the axis-deviation amount computing unit 9 or the second axis-deviation amount computing unit 101 for an axis deviation amount. As the axis deviation amount after switching is represented by $\Delta\theta h$, the symbol of an output signal from the axis-deviation amount computing unit 9 is changed to $\Delta\theta h$. The second axis deviation amount computing unit 101 estimates an axis deviation amount $\Delta\theta emf$, according to Expression 10 and using characteristic parameters of a motor.

$$\Delta\theta emf = \tan^{-1} \frac{Vdc^* - (r_1 \cdot Idc - \omega_1 Lq \cdot Iqc)}{Vqc^* - (r_1 \cdot Iqc - \omega_1 Lq \cdot Idc)}$$

Expression 10

In Expression 10, $\omega_1$ represents an output frequency and is a differential value of $\theta dc$. The second axis-deviation amount computing unit 101 does not require superimposing of a high-frequency voltage, however, satisfactory estimation of an axis deviation amount is not possible under operation conditions with an extremely low speed which makes the induction voltage low. On the other hand, the control method in the first embodiment is applicable even from a stop state to a low speed state. However, a high-frequency current by superimposing a high-frequency voltage may generate noises, and the torque may be limited by the current limit of hardware. In this situation, in this embodiment, the control method in the first embodiment is applied at an extremely low speed, and is switched to the second axis-deviation amount computing unit at a rotation speed that makes the induction voltage sufficiently high.

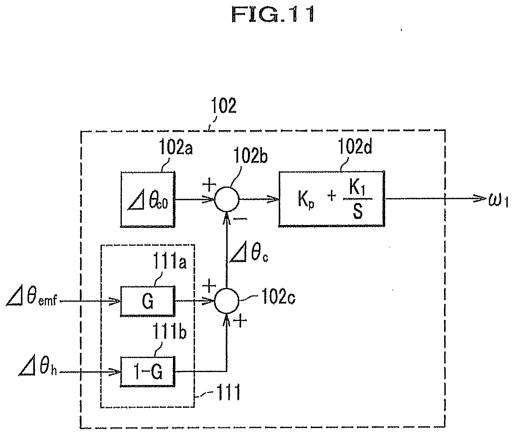

FIG. 11 is a block diagram of the magnetic-excitation phase switching adjusting unit 102. By a switching taper gain 111, switching is performed between the output $\Delta\theta h$ from the axis-deviation amount computing unit 9 and the output $\Delta\theta emf$ from the second axis deviation amount computing unit 101.

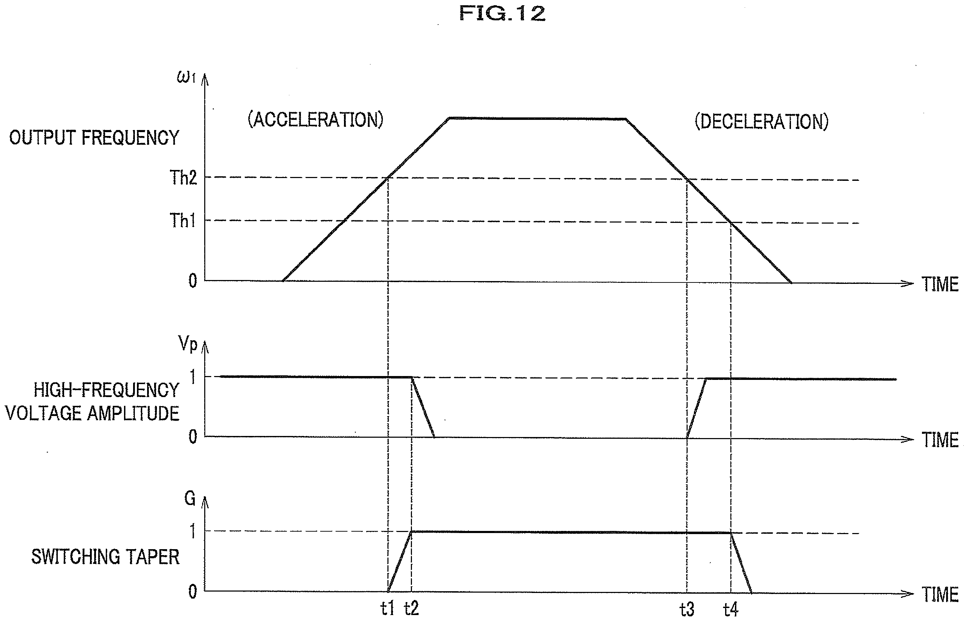

A control method switching sequence during acceleration/deceleration will be described below, with reference to FIG. 12.

During acceleration, at time t1 when the output frequency $\omega_1$ has become higher than or equal to a predetermined value Th2, the value of gain G of the switching taper gain 111 is made transit to 1 in an arbitrary time. At time t2 when the value of gain G reaches 1, as the axis deviation amount is completely switched to $\Delta\theta emf$, the amplitude of the high-frequency voltage is made transit to zero, and superimposing of the high-frequency voltage is terminated.

During deceleration, at time t3 when the output frequency $\omega_1$ has become lower than or equal to a threshold value Th2, superimposing of the high-frequency voltage is resumed. At time t4 when the output frequency $\omega_1$ has become lower than or equal to Th1 by further deceleration, the value of the gain G of the switching taper gain 111 is made transit from 1 to 0.

As synchronization control between p-axis and d-axis is independent from other motor control systems, synchronization control for making p-axis and d-axis agree with each other is attained during the time from time t3 to time t4, and smooth switching of the axis deviation amount is realized. While the amplitude of the high-frequency voltage is zero, the value of $\theta dc$ is reflected to the value of $\theta p$. Thus, the initial value of $\theta p$ becomes $\theta dc$ when superimposing of the high-frequency voltage is resumed, and p-axis and d-axis are quickly made agree with each other.

As has been described above, in this embodiment, synchronization control to make p-axis and d-axis agree with each other is arranged to be independent from other control systems, and thereby, switching shock of an axis deviation amount generated through axis deviation amount switching is prevented, which realizes smooth switching and continuation of operation.

(Third Embodiment)

In the above-described respective embodiments, a synchronous motor has been used as a motor, however, an induction motor also can be used.

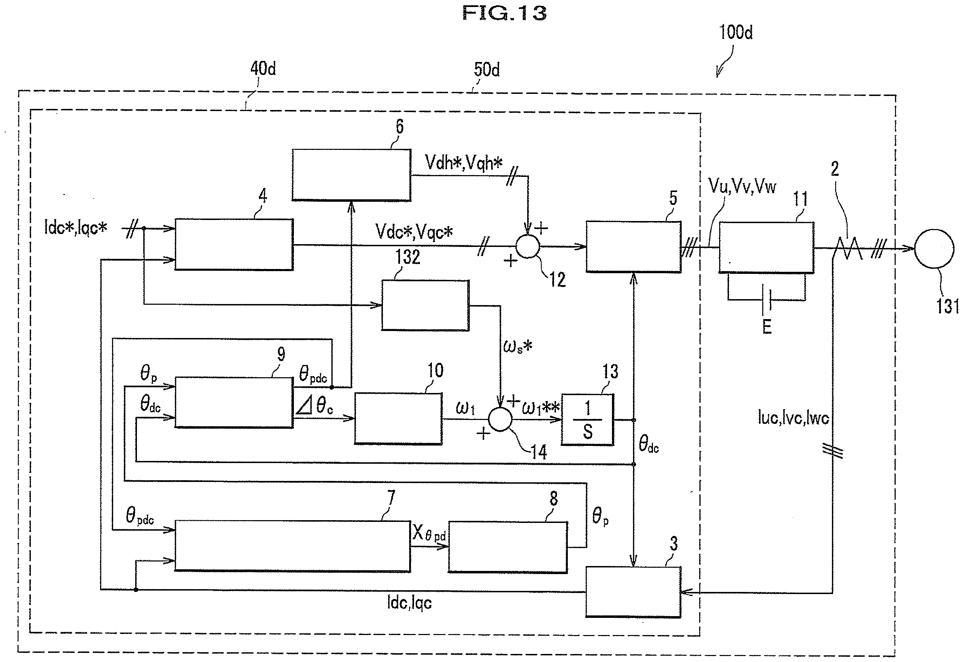

FIG. 13 is a diagram of the configuration of a motor control system of a third embodiment according to the present invention.

This embodiment is different from the first and second embodiments in that a motor control system 100d uses an induction motor 131 instead of the motor 1, and is additionally provided with a slip compensation unit 132 and an adder 14.

In the case of the induction motor 131, saliency due to the shape of a rotor is not present, however, as the magnetic saturation phenomenon due to the secondary magnet flux excited by the induction current on the primary side causes equivalent saliency of impedance, the method in the first embodiment is applicable. That is, as the rotor (not shown) of the induction motor is not provided with magnets, the superimposing phase adjusting unit 8 (FIG. 5) can make d-axis, which is made to follow p-axis, correspond to the phase of the secondary magnet flux.

Induction motor control usually has dc-axis being the magnetic excitation axis in FIG. 13 be d-axis. However, in relation to the first and second embodiments, the magnetic excitation axis will hereinafter be referred to as dc-axis, and the secondary magnet flux phase will be referred to as d-axis.

The slip compensation unit 132 computes a slip compensation value $\omega s^*$ according to Expression 11, using a secondary time constant T2 of the induction motor 131.

$$\omega^*{}_s = \frac{Iqc}{T_2 \cdot Idc}$$

Expression 11

The adder 14 adds the above-described slip compensation value ωs* to an output (phase change speed (of the superimposing axis)) ω₁ from the magnetic-excitation phase adjusting unit 10, and outputs an output frequency ω₁**. The torque T_M generated by the inductance motor 131 is represented by Expression 12.

$$\tau_M = \phi_{dc} \cdot Iqc - \phi_{qc} \cdot Idc$$

$$\text{Expression 12}$$

Similar to the first embodiment, the magnetic-excitation phase adjusting unit 10 synchronizes d-axis and dc-axis. As a result, the qc-axis component φqc of the secondary magnet flux becomes zero, and a generated torque can be controlled by Iqc, according to Expression 12.

Further, as slip compensation is executed, the output ω₁ from the magnetic-excitation phase adjusting unit 10 becomes an estimated value of the speed of the rotor in a steady state.

As has been described above, by the motor control system 100d in this embodiment, it is possible to solve the problem, which is a principle problem with a high-frequency voltage superimposing method that uses the saliency of the induction motor 131 due to the magnetic saturation, namely a problem of an error in estimation of an axis deviation amount caused by the sine wave characteristic of an axis error reference amount. Accordingly, the motor control system 100d in this embodiment is able to continue motor control without stepping out of the motor even with a rapid load application or rapid acceleration/deceleration.

(Fourth Embodiment)

In the above-described respective embodiments, it has been assumed that the inductances Ld, Lq of the motor 1 or the motor 131 are linear. However, when the current amount increases due to the shape of the motor or in the high load region, non-linearity phenomenon, such as magnetic saturation, occurs. As a result, the characteristic of the axis error reference amount in FIG. 8 changes with the current operation point.

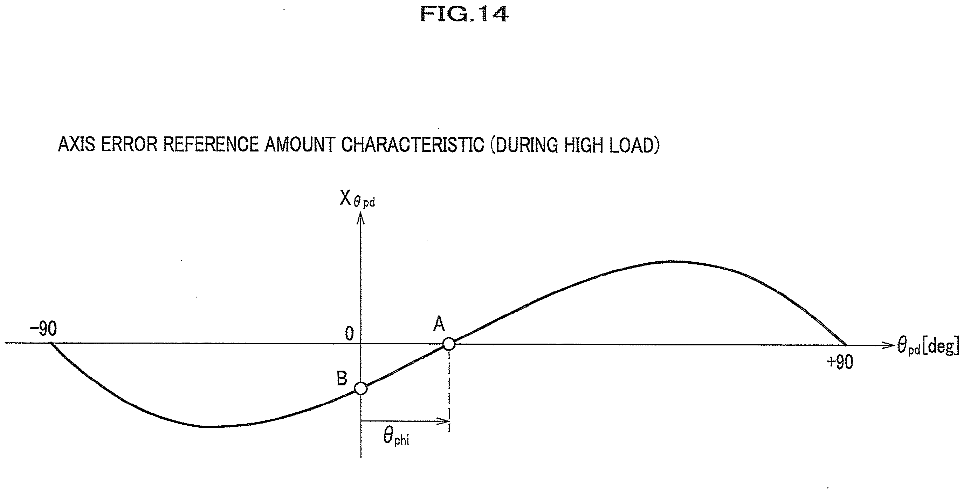

FIG. 14 represents an example of the characteristic of the axis error reference amount during application of a high load. Attention should be paid to that the characteristic of the sine waveform changes such that Xθpd=0 intersects with the sine wave shape at the point θpd=θphi and does not intersect at the origin. In such a case, by the method in the first embodiment or the second embodiment, the superimposing phase adjusting unit 8 controls p-axis such that Xθpd=0, and accordingly, p-axis in a steady state converges in a phase direction that is deviated from d-axis by θphi.

It is possible to work through even such a situation by just making simple modification to the first embodiment and the second embodiment. The following two methods can be a solution.

The first method is to set the operation point to point B where θpd=0 in FIG. 14. Concretely, the instruction value Xθpd0 of the axis error reference amount in the superimposing phase adjusting unit 8, shown in FIG. 5, is set to an appropriate value corresponding to point B. As a result, the superimposing phase adjusting unit 8 adjusts θp such that Xθpd0 becomes a value corresponding to point B, and θpd thereby becomes zero so that p-axis and d-axis agree with each other.

The second method is to set the operation point to point A in FIG. 14. Concretely, the above-described instruction value Xθpdo is maintained to be 0, while the instruction value Δθc0 by the magnetic-excitation phase adjusting unit 10 is set to -θphi, which is a value corresponding to the deviation by point A. The superimposing phase adjusting unit 8 synchronizes p-axis in a direction that is θphi, in phase, ahead of d-axis.

In other words, in the second method, d-axis is located in a direction that is θphi, in phase, behind p-axis, and thereby, dc-axis and d-axis can be made agree with each other by correction such as to satisfy the axis deviation amount Δθc = -θphi.

The values of Δθc0 and Xθpdo used in these corrections are implemented, for example, by a table to which a current detection value or a current instruction vale is input. For simplification, these values can be implemented by multiplying the input by a gain.

As has been described above, in this embodiment, motor control can be continued with no problems even under a high load condition where the saliency of inductance changes with the non-linear characteristic of a motor.

(Fifth Embodiment)

The operation point can be set to an arbitrary point in FIG. 14 by appropriately setting both the values of Δθc0 and Xθpd0. As the phase direction of the high-frequency voltage at the operation point can be thus set, it is possible to select, for example, a combination of Δθc0 and Xθpd0 with which torque vibration (torque ripple) due to a high-frequency current does not occur.

As has been described above, by appropriate selection in setting Δθc0 and Xθpd0 as in this embodiment, it is possible to operate the high-frequency superimposing phase in a balance state, reduce torque ripple due to superimposing high-frequency voltage, and minimize noises and vibration.

(Sixth Embodiment)

The motor control apparatuses 40a, 40b, 40c, and 40d in the above-described respective embodiments have added a high-frequency voltage to a voltage instruction on dqc-axis, and computed an axis error reference amount, based on detected currents Idc, Iqc on dqc-axis. In this case, in the motor control apparatuses 40a, 40b, 40c, and 40d, it is necessary to input θpdc derived from θdc to the alternating voltage generating unit 6 and the axis-error reference amount computing unit 7 in order to cancel processing of coordinate-transformation of the alternating voltage and the high-frequency current once to dqc-axis, which is essentially unrelated to the superimposing phase adjusting unit 8. This means that calculation that is unnecessary for the superimposing phase adjusting unit, which is independent from dqc-axis in mathematical expression, is performed, and it is thus possible that the effects of sample delay or commutation error act as disturbances. In this embodiment, independence of the superimposing phase adjusting unit is improved by adding the alternating voltage on ab-axis.

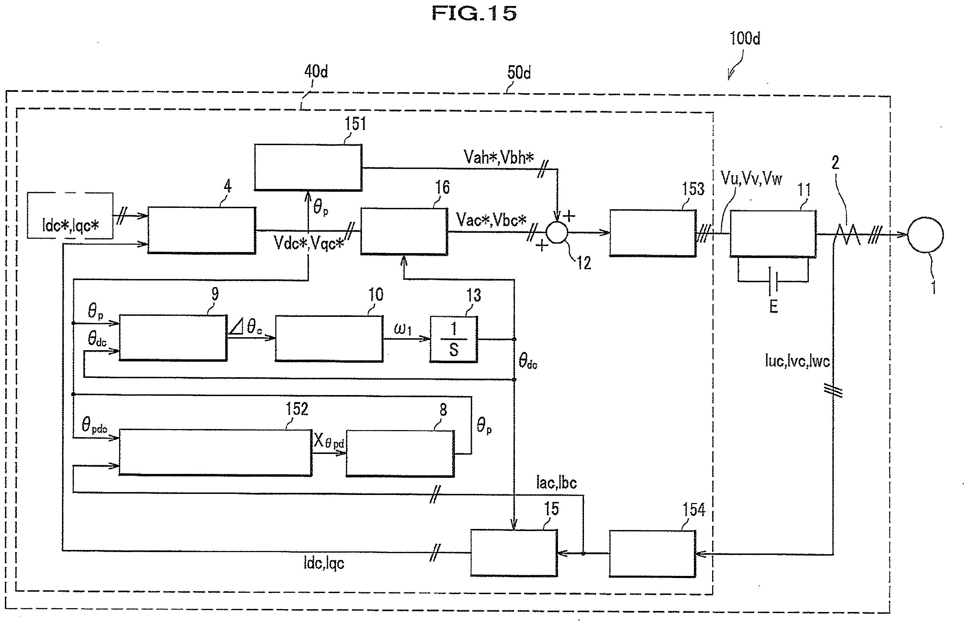

FIG. 15 is a diagram of the entire configuration of a motor control system of this embodiment. The difference from the first embodiment will be described below with reference to drawings.

A motor control system 100d is provided with a two-phase/three-phase converting unit 153 and a coordinate transforming unit 16 instead of the coordinate transforming unit 5, a three-phase/two-phase converting unit 154 and a coordinate transforming unit 15 instead of the coordinate transforming unit 3, a alternating voltage generating unit 151 instead of the alternating voltage generating unit 6, and an axis-error reference amount computing unit 152 instead of the axis-error reference amount computing unit 7.

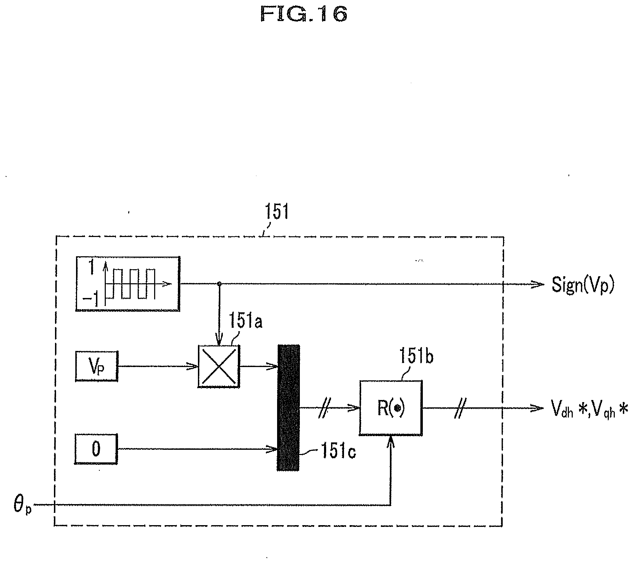

An alternating voltage generating unit 151 generates an alternating voltage corresponding to the superimposing phase θp. Herein, a high-frequency-voltage current-phase-difference computing unit 42b (FIG. 16) performs coordinate transformation from pz coordinates to ab coordinates. An adder 12 (FIG. 15) adds output signals Vah*, Vbh* of the alternating voltage generating unit 151, and voltage instructions Vac*, Vbc* with respect to ab-axis.

The three-phase/two-phase converting unit 14 inputs high-frequency current signals 1ac, 1bc with respect to ab-axis to the axis-error reference amount computing unit 152.

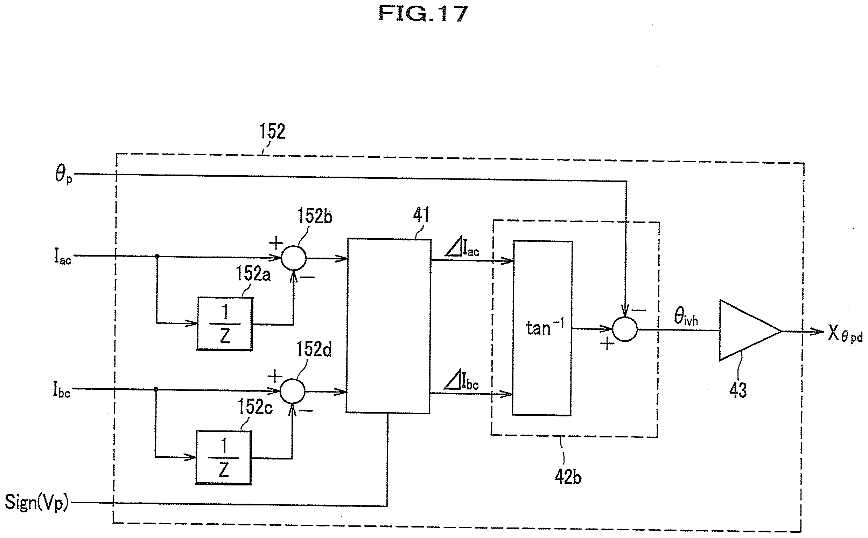

FIG. 17 is a block diagram of the axis-error reference amount computing unit 152.

In the axis-error reference amount computing unit 152, phase shifters 152a, 152c, and adders 152b, 152d compute the high-frequency current signals 1ac, 1bc for one time lag, computes high-frequency current components Δ1ac, Δ1bc through an alternating voltage sign correcting unit 41, based on a result of this computation, and then the high-frequency-voltage current-phase difference computing unit 42b performs computation of Expression 13 instead of Expression 9.

$$\theta ivh = \arctan\left(\frac{\Delta Ibc}{\Delta Iac}\right) - \theta p \qquad \text{Expression 13}$$

By using such arrangement, a signal derived from θdc is not input to the alternating voltage generating unit 151 and the axis-error reference amount computing unit 152 with respect to dqc-axis. As a result, the operation on dqc-axis does not affects the superimposing phase adjusting unit 8 by a sample delay or a computation error, and stable motor control is thereby realized.

## Claims

1. A vector control apparatus that is configured to perform vector control by controlling a magnetic-excitation axis voltage ($V_{dc}$*) and a torque axis voltage ($V_{qc}$*) orthogonal to the magnetic-excitation axis (dc-axis) so that a magnetic-excitation axis component ($I_{dc}$) and a torque axis component ($I_{qc}$) of a motor current which flows in an alternating current motor become target values, comprising:

   an alternating voltage superimposing unit (6) that is configured to superimpose an alternating voltage with a frequency that is different from a frequency of the motor current, to resolve the alternating voltage into a component of the magnetic-excitation axis voltage ($V_{dc}$*) and a component of the torque axis voltage ($V_{qc}$*);
   a high-frequency current phase-difference computing unit (7) that, having a reference phase of the alternating voltage be a superimposing axis (p-axis), is configured to subtract a phase ($\theta_{pdc}$) of the superimposing axis (p-axis) from a phase ($\arctan(\Delta Iqc/\Delta Idc)$) of a high-frequency current that is generated in the motor current by the alternating voltage, and to compute thereby an axis-error reference amount ($X\theta_{pd}$) that is based on a phase difference ($\theta_{ivh}$) between the high-frequency current and the alternating voltage;

a superimposing axis adjusting unit (8) that is configured to adjust a phase direction of the superimposing axis (p-axis) by a proportional integration of a deviation between the axis-error reference amount ($X\theta_{pd}$) and a target value ($X\theta_{pd0}$) so that the axis-error reference amount ($X\theta_{qd}$) becomes zero or a predetermined target value;

an axis deviation amount computing unit (9) that is configured to compute an axis deviation amount ($\Delta\theta_c$) between the superimposing axis (p-axis) whose direction has been adjusted by the superimposing axis adjusting unit (8) and the magnetic-excitation axis (dc-axis); and

a magnetic-excitation axis adjusting unit (10) that is configured to adjust a phase direction of the magnetic-excitation axis (dc-axis) by a proportional integration of a deviation between the axis deviation amount ($\Delta\theta_c$) and a target value ($\Delta\theta_{c0}$) so that the axis deviation amount ($\Delta\theta_c$) becomes zero or a predetermined target value.

2. The vector control apparatus according to claim 1,
wherein the alternating current motor is a synchronous motor having saliency,
wherein the superimposing axis adjusting unit (8) is configured to make a magnetic pole axis (d-axis) and the superimposing axis (p-axis) agree substantially with each other,
and wherein the axis deviation amount ($\Delta\theta_c$) computed by the axis deviation amount computing unit (9) represents a phase difference between the magnetic pole axis (d-axis) and the magnetic-excitation axis (dc-axis).

3. The vector control apparatus according to claim 1,
wherein the alternating current motor is an induction motor,
wherein the apparatus further comprises:

a slip frequency instruction computing unit that is configured to compute a slip frequency instruction value, based on a target value of magnetic-excitation axis component of motor current;
an adder that is configured to add the slip frequency instruction value to a phase change speed of the superimposing axis (p-axis); and
an integrator that is configured to integrate an output frequency of the adder,

and wherein the phase direction, adjusted by the magnetic-excitation axis adjusting unit (10), of the magnetic-excitation axis (dc-axis) is defined, based on a phase signal that is output by the integrator.

4. The vector control apparatus according to any one of claims 1 to 3,
wherein the alternating current motor is fitted with no control amount detecting unit that is configured to detect a physical amount that is any one of a rotation speed of a rotor, a rotator position, and a magnetic-excitation flux position thereof.

5. The vector control apparatus according to any one of claims 1 to 3,
wherein the alternating voltage is either a rectangular wave voltage or a sine wave voltage.

6. The vector control apparatus according to claim 1, further comprising:

a high-speed-region axis-deviation amount computing unit that is configured to compute an axis deviation between the magnetic pole axis (d-axis) and the magnetic-excitation axis (dc-axis) of the motor, based on the magnetic-excitation axis voltage ($V_{dc}{}^*$), the torque axis voltage ($V_{qc}{}^*$), the magnetic-excitation axis component ($I_{dc}$) of the motor current, the component ($I_{qc}$) orthogonal to the magnetic-excitation axis, and the corresponding target values; and
an axis deviation amount switching unit that, when the phase change speed of the superimposing axis (p-axis) has become higher than a set value, switches input to the magnetic-excitation axis adjusting unit (10), from the axis deviation amount computed by the axis deviation amount computing unit (9) to a high-speed-region axis deviation amount computed by the high-speed-region axis-deviation amount computing unit,
wherein the alternating voltage superimposing unit is configured to stop superimposing of the alternating voltage when the phase change speed of the superimposing axis (p-axis) has become higher than the set value.

7. The vector control apparatus according to claim 1, further comprising:

a high-speed-region axis-deviation amount computing unit that is configured to compute an axis deviation between the magnetic pole axis (d-axis) and the magnetic-excitation axis (dc-axis) of the motor, from a back electromotive voltage of the alternating current motor; and

an axis-deviation amount switching unit that is configured to, when a phase change speed of the superimposing axis (p-axis) has become higher than a set value, switch input to the magnetic-excitation axis adjusting unit (10), from the axis deviation amount computed by the axis deviation amount computing unit (9) to a high-speed-region axis deviation amount computed by the high-speed-region axis deviation amount computing unit, wherein the alternating voltage superimposing unit is configured to stop superimposing of the alternating voltage when the phase change speed of the superimposing axis (p-axis) has become higher than the set value.

**8.** The vector control apparatus according to claim 6 or 7,

wherein the axis deviation amount switching unit is configured to switch input to the magnetic-excitation axis adjustment unit (10), from output of the high-speed-region axis-deviation amount computing unit to output of the axis deviation amount computing unit (9), after:

the alternating voltage superimposing unit (6) is configured to start voltage-superimposing when the phase change speed of the superimposing axis (p-axis) has become lower than a set speed that is lower than the set value; and

a following period has elapsed, the following period being defined based on a response speed at which the superimposing axis adjusting unit (8) has the superimposing axis (p-axis) follow rotator flux of the alternating current motor (1).

**9.** The vector control apparatus according to claim 1 or 2,

wherein the response speed at which the superimposing axis adjusting unit (10) has the superimposing axis (p-axis) follow the rotator flux of the motor (1) is higher than a response speed of the magnetic-excitation axis adjustment unit (10).

**10.** The vector control apparatus according to claim 1 or 2,

wherein the superimposing axis adjusting unit (8) is configured to set a target value of the phase difference computed by the high-frequency current phase-difference computing unit (7) such that the superimposing axis (p-axis) and the magnetic pole axis (d-axis) substantially agree with each other.

**11.** The vector control apparatus according to claim 1 or 2,

wherein the magnetic-excitation axis adjusting unit (10) is configured to set the target value of the axis deviation amount ($\Delta\theta_c$) to a superimposing axis phase with respect to a magnetic-excitation axis (dc-axis) that is in a case where an orbit of a high-frequency current generated by the high-frequency current substantially agree with the superimposing axis (p-axis).

**12.** The vector control apparatus according to claim 1 or 2,

wherein the target value of the phase difference ($\theta$ivh) that is computed by the high-frequency current phase-difference computing unit (7) and the target value of the axis deviation amount ($\Delta\theta_c$) are set such that a voltage superimposing direction in a steady state becomes a phase direction that reduces torque ripple caused by the superimposing of the alternating voltage.

**13.** A motor control system (100) having an alternating current motor (1), a power convertor (11) that is configured to drive the alternating current motor (1), and a vector control apparatus of one of the preceding claims.

**Patentansprüche**

**1.** Vektorsteuerungsvorrichtung, die konfiguriert ist, eine Vektorsteuerung durch Steuern einer Magneterregungsachsenspannung ($V_{dc}$*) und einer Drehmomentachsenspannung ($V_{qc}$*), die zur Magneterregungsachse (dc-Achse) senkrecht ist, derart durchzuführen, dass eine Magneterregungsachsenkomponente ($I_{dc}$) und eine Drehmomentachsenkomponente ($I_{qc}$) eines Motorstroms, der in einem Wechselstrommotor fließt, Sollwerte sind, und die Folgendes umfasst:

eine Wechselspannungsüberlagerungseinheit (6), die konfiguriert ist, eine Wechselspannung mit einer Frequenz, die von einer Frequenz des Motorstroms verschieden ist, zu überlagern, um die Wechselspannung in eine Komponente der Magneterregungsachsenspannung ($V_{dc}$*) und eine Komponente der Drehmomentachsenspannung ($V_{qc}$*) zu zerlegen;

eine Hochfrequenzstromphasendifferenz-Berechnungseinheit (7), die, wobei eine Bezugsphase der Wechselspannung als eine Überlagerungsachse (p-Achse) dient, konfiguriert ist, eine Phase ($\theta_{pdc}$) der Überlagerungs-

achse (p-Achse) von einer Phase ($\arctan(\Delta I_{qc}/\Delta I_{dc})$) eines Hochfrequenzstroms, der im Motorstrom durch die Wechselspannung erzeugt wird, zu subtrahieren und dadurch einen Achsenfehlerbezugsbetrag ($X\theta_{pd}$), der auf einer Phasendifferenz ($\theta_{ivh}$) zwischen dem Hochfrequenzstrom und der Wechselspannung basiert, zu berechnen;

ein Überlagerungsachsenanpasseinheit (8), die konfiguriert ist, eine Phasenrichtung der Überlagerungsachse (p-Achse) durch eine proportionale Integration einer Abweichung zwischen dem Achsenfehlerbezugsbetrag ($X\theta_{pd}$) und einem Sollwert ($X\theta_{pd0}$) derart anzupassen, dass der Achsenfehlerbezugsbetrag ($X\theta_{pd}$) null oder ein vorgegebener Sollwert ist;

eine Achsenabweichungsberechnungseinheit (9), die konfiguriert ist, einen Achsenabweichungsbetrag ($\Delta\theta_c$) zwischen der Überlagerungsachse (p-Achse), deren Richtung durch die Überlagerungsachsenanpasseinheit (8) angepasst worden ist, und der Magneterregungsachse (dc-Achse) zu berechnen; und

eine Magneterregungsachsenanpasseinheit (10), die konfiguriert ist, eine Phasenrichtung der Magneterregungsachse (dc-Achse) durch eine proportionale Integration einer Abweichung zwischen dem Achsenabweichungsbetrag ($\Delta\theta_c$) und einem Sollwert ($\Delta\theta_{c0}$) derart anzupassen, dass der Achsenabweichungsbetrag ($\Delta\theta_c$) null oder ein vorgegebener Sollwert ist.

2. Vektorsteuerungsvorrichtung nach Anspruch 1, wobei
der Wechselstrommotor ein Synchronmotor ist, der Salienz aufweist,
die Überlagerungsachsenanpasseinheit (8) konfiguriert ist, die Magnetpolachse (d-Achse) und die Überlagerungsachse (p-Achse) im Wesentlichen miteinander übereinstimmend zu gestalten, und
der Achsenabweichungsbetrag ($\Delta\theta_c$), der durch die Achsenabweichungsberechnungseinheit (9) berechnet wird, eine Phasendifferenz zwischen der Magnetpolachse (d-Achse) und der Magneterregungsachse (dc-Achse) repräsentiert.

3. Vektorsteuerungsvorrichtung nach Anspruch 1, wobei
der Wechselstrommotor ein Induktionsmotor ist,
die Vorrichtung ferner Folgendes umfasst:

eine Schlupffrequenzanweisungsberechnungseinheit, die konfiguriert ist, einen Schlupffrequenzanweisungswert auf der Grundlage eines Sollwerts einer Magneterregungsachsenkomponente eines Motorstroms zu berechnen;
einen Addierer, der konfiguriert ist, den Schlupffrequenzanweisungswert zu einer Phasenänderungsgeschwindigkeit der Überlagerungsachse (p-Achse) zu addieren; und
einen Integrator, der konfiguriert ist, eine Ausgangsfrequenz des Addierers zu integrieren, und

die Phasenrichtung der Magneterregungsachse (dc-Achse), die durch die Magneterregungsachsenanpasseinheit (10) angepasst wurde, auf der Grundlage eines Phasensignals, das durch den Integrator ausgegeben wird, definiert ist.

4. Vektorsteuerungsvorrichtung nach einem der Ansprüche 1 bis 3, wobei
der Wechselstrommotor mit keiner Steuerbetragsdetektionseinheit ausgestattet ist, die konfiguriert ist, einen physikalischen Betrag, der eine Drehzahl eines Rotors, eine Rotatorposition oder eine Magneterregungsflussposition davon ist, zu detektieren.

5. Vektorsteuerungsvorrichtung nach einem der Ansprüche 1 bis 3, wobei
die Wechselspannung entweder eine Rechteckschwingungsspannung oder einen Sinusschwingungsspannung ist.

6. Vektorsteuerungsvorrichtung nach Anspruch 1, die ferner Folgendes umfasst:

eine Hochgeschwindigkeitsbereichs-Achsenabweichungsbetrags-Berechnungseinheit, die konfiguriert ist, eine Achsenabweichung zwischen der Magnetpolachse (d-Achse) und der Magneterregungsachse (dc-Achse) des Motors auf der Grundlage der Magneterregungsachsenspannung ($V_{dc}^{*}$), der Drehmomentachsenspannung ($V_{qc}^{*}$), der Magneterregungsachsenkomponente ($I_{dc}$) des Motorstroms, der Komponente ($I_{qc}$), die zur Magneterregungsachse senkrecht ist, und den entsprechenden Sollwerten zu berechnen; und
eine Achsenabweichungsbetragsumschalteinheit, die dann, wenn die Phasenänderungsgeschwindigkeit der Überlagerungsachse (p-Achse) höher als ein Sollwert ist, die Eingabe zur Magneterregungsachsenanpasseinheit (10) vom Achsenabweichungsbetrag, der durch die Achsenabweichungsbetragsberechnungseinheit (9) berechnet wurde, zu einem Hochgeschwindigkeitsbereichs-Achsenabweichungsbetrag, der durch die Hochgeschwindigkeitsbereichs-Achsenabweichungsbetrags-Berechnungseinheit berechnet wurde, umschaltet, wobei die Wechselspannungsüberlagerungseinheit konfiguriert ist, das Überlagern der Wechselspannung anzuhalten, wenn die Phasenänderungsgeschwindigkeit der Überlagerungsachse (p-Achse) höher als der Sollwert ist.

7. Vektorsteuerungsvorrichtung nach Anspruch 1, die ferner Folgendes umfasst:

eine Hochgeschwindigkeitsbereichs-Achsenabweichungsbetrags-Berechnungseinheit, die konfiguriert ist, eine Achsenabweichung zwischen der Magnetpolachse (d-Achse) und der Magneterregungsachse (dc-Achse) des Motors aus einer gegenelektromotorischen Spannung des Wechselstrommotors zu berechnen; und eine Achsenabweichungsbetragsumschalteinheit, die konfiguriert ist, dann, wenn die Phasenänderungsgeschwindigkeit der Überlagerungsachse (p-Achse) höher als ein Sollwert ist, die Eingabe zur Magneterregungsachsenanpasseinheit (10) vom Achsenabweichungsbetrag, der durch die Achsenabweichungsbetragsberechnungseinheit (9) berechnet wurde, zu einem Hochgeschwindigkeitsbereichs-Achsenabweichungsbetrag, der durch die Hochgeschwindigkeitsbereichs-Achsenabweichungsbetrags-Berechnungseinheit berechnet wurde, umschaltet, wobei die Wechselspannungsüberlagerungseinheit konfiguriert ist, das Überlagern der Wechselspannung anzuhalten, wenn die Phasenänderungsgeschwindigkeit der Überlagerungsachse (p-Achse) höher als der Sollwert ist.

8. Vektorsteuerungsvorrichtung nach Anspruch 6 oder 7, wobei die Achsenabweichungsbetragsumschalteinheit konfiguriert ist, die Eingabe zur Magneterregungsachsenanpasseinheit (10) von einer Ausgabe der Hochgeschwindigkeitsbereichs-Achsenabweichungsbetrags-Berechnungseinheit zur Ausgabe der Achsenabweichungsbetragsberechnungseinheit (9) umzuschalten, nachdem die Wechselspannungsüberlagerungseinheit (6) konfiguriert ist, ein Spannungsüberlagern zu beginnen, wenn die Phasenänderungsgeschwindigkeit der Überlagerungsachse (p-Achse) kleiner als eine Sollgeschwindigkeit, die kleiner als der Sollwert ist, ist; und ein folgender Zeitraum verstrichen ist, wobei der folgende Zeitraum auf der Grundlage einer Antwortgeschwindigkeit definiert ist, bei der die Überlagerungsachsenanpasseinheit (8) die Überlagerungsachse (p-Achse) dem Rotatorfluss des Wechselstrommotors (1) folgen lässt.

9. Vektorsteuerungsvorrichtung nach Anspruch 1 oder 2, wobei die Antwortgeschwindigkeit, bei der die Überlagerungsachsenanpasseinheit (10) die Überlagerungsachse (p-Achse) dem Rotatorfluss des Motors (1) folgen lässt, höher als eine Antwortgeschwindigkeit der Magneterregungsachsenanpasseinheit (10) ist.

10. Vektorsteuerungsvorrichtung nach Anspruch 1 oder 2, wobei die Überlagerungsachsenanpasseinheit (8) konfiguriert ist, eine Sollwert der Phasendifferenz, die durch die Hochfrequenzstromphasendifferenz-Berechnungseinheit (7) berechnet wird, derart einzustellen, dass die Überlagerungsachse (p-Achse) und die Magnetpolachse (d-Achse) im Wesentlichen miteinander übereinstimmen.

11. Vektorsteuerungsvorrichtung nach Anspruch 1 oder 2, wobei die Magneterregungsachsenanpasseinheit (10) konfiguriert ist, den Sollwert des Achsenabweichungsbetrags ($\Delta\theta_c$) auf eine Überlagerungsachsenphase in Bezug auf eine Magneterregungsachse (dc-Achse), das heißt in einem Fall, in dem eine Bahn eines Hochfrequenzstroms, die durch den Hochfrequenzstrom erzeugt wird, im Wesentlichen mit der Überlagerungsachse (p-Achse) übereinstimmt, einzustellen.

12. Vektorsteuerungsvorrichtung nach Anspruch 1 oder 2, wobei der Sollwert der Phasendifferenz ($\theta_{ivh}$), der durch die Hochfrequenzstromphasendifferenz-Berechnungseinheit (7) berechnet wird, und der Sollwert des Achsenabweichungsbetrags ($\Delta\theta_c$) derart eingestellt sind, dass eine Spannungsüberlagerungsrichtung in einem Beharrungszustand eine Phasenrichtung ist, die eine Drehmomentwelligkeit, die durch das Überlagern der Wechselspannung bewirkt wird, repräsentiert.

13. Motorsteuersystem (100), das einen Wechselstrommotor (1), einen Leistungsumsetzer (11), der konfiguriert ist, den Wechselstrommotor (1) anzutreiben, und eine Vektorsteuerungsvorrichtung nach einem der vorhergehenden Ansprüche besitzt.

**Revendications**

1. Appareil de commande vectorielle qui est configuré pour effectuer une commande vectorielle en commandant une tension d'axe d'excitation magnétique ($V_{dc}*$) et une tension d'axe de couple ($V_{qc}*$) orthogonale à l'axe d'excitation magnétique (axe dc) de sorte qu'une composante d'axe d'excitation magnétique ($I_{dc}$) et une composante d'axe de couple ($I_{qc}$) d'un courant de moteur qui circule dans un moteur à courant alternatif deviennent des valeurs cibles, comprenant :

   une unité de superposition de tension alternative (6) qui est configurée pour superposer une tension alternative à une fréquence qui est différente d'une fréquence du courant de moteur, pour résoudre la tension alternative en une composante de la tension d'axe d'excitation magnétique ($V_{dc}*$) et une composante de la tension d'axe de couple ($V_{qc}*$) ;
   une unité de calcul de différence de phase de courant à haute fréquence (7) qui, faisant d'une phase de référence de la tension alternative un axe de superposition (axe p), est configurée pour soustraire une phase ($\theta_{pdc}$) de l'axe de superposition (axe p) d'une phase ($arctan(\Delta I_{qc}/\Delta I_{dc})$) d'un courant à haute fréquence qui est généré dans le courant de moteur par la tension alternative, et pour calculer ainsi une quantité de référence d'erreur d'axe ($X\theta_{pd}$) qui est basée sur une différence de phase ($\theta_{ivh}$) entre le courant à haute fréquence et la tension alternative ;
   une unité de réglage d'axe de superposition (8) qui est configurée pour régler une direction de phase de l'axe de superposition (axe p) par une intégration proportionnelle d'un écart entre la quantité de référence d'erreur d'axe ($X\theta_{pd}$) et une valeur cible ($X\theta_{pd0}$) de sorte que la quantité de référence d'erreur d'axe ($X\theta_{pd}$) devienne nulle ou une valeur cible prédéterminée ;
   une unité de calcul de quantité d'écart d'axe (9) qui est configurée pour calculer une quantité d'écart d'axe ($\Delta\theta_c$) entre l'axe de superposition (axe p) dont la direction a été réglée par l'unité de réglage d'axe de superposition (8) et l'axe d'excitation magnétique (axe dc) ; et
   une unité de réglage d'axe d'excitation magnétique (10) qui est configurée pour régler une direction de phase de l'axe d'excitation magnétique (axe dc) par une intégration proportionnelle d'un écart entre la quantité d'écart d'axe ($\Delta\theta_c$) et une valeur cible ($\Delta\theta_{c0}$) de sorte que la quantité d'écart d'axe ($\Delta\theta_c$) devienne nulle ou une valeur cible prédéterminée.

2. Appareil de commande vectorielle selon la revendication 1,
   dans lequel le moteur à courant alternatif est un moteur synchrone ayant une saillance,
   dans lequel l'unité de réglage d'axe de superposition (8) est configurée pour faire sensiblement concorder entre eux un axe polaire magnétique (axe d) et l'axe de superposition (axe p),
   et dans lequel la quantité d'écart d'axe ($\Delta\theta_c$) calculée par l'unité de calcul de quantité d'écart d'axe (9) représente une différence de phase entre l'axe polaire magnétique (axe d) et l'axe d'excitation magnétique (axe dc).

3. Appareil de commande vectorielle selon la revendication 1,
   dans lequel le moteur à courant alternatif est un moteur à induction,
   dans lequel l'appareil comprend en outre :

   une unité de calcul d'instruction de fréquence de glissement qui est configurée pour calculer une valeur d'instruction de fréquence de glissement sur la base d'une valeur cible de la composante d'axe d'excitation magnétique du courant de moteur ;
   un additionneur qui est configuré pour additionner la valeur d'instruction de fréquence de glissement à une vitesse de changement de phase de l'axe de superposition (axe p) ; et
   un intégrateur qui est configuré pour intégrer une fréquence de sortie de l'additionneur,
   et dans lequel la direction de phase, réglée par l'unité de réglage d'axe d'excitation magnétique (10), de l'axe d'excitation magnétique (axe dc) est définie sur la base d'un signal de phase qui est délivré par l'intégrateur.

4. Appareil de commande vectorielle selon l'une quelconque des revendications 1 à 3,
   dans lequel le moteur à courant alternatif est équipé d'une unité de détection de quantité de commande qui est configurée pour détecter une quantité physique qui est l'une quelconque parmi une vitesse de rotation d'un rotor, une position de rotateur et une position de flux d'excitation magnétique de celui-ci.

5. Appareil de commande vectorielle selon l'une quelconque des revendications 1 à 3,
   dans lequel la tension alternative est soit une tension rectangulaire, soit une tension sinusoïdale.

**6.** Appareil de commande vectorielle selon la revendication 1, comprenant en outre :

une unité de calcul de quantité d'écart d'axe de région à grande vitesse qui est configurée pour calculer un écart d'axe entre l'axe polaire magnétique (axe d) et l'axe d'excitation magnétique (axe dc) du moteur sur la base de la tension d'axe d'excitation magnétique ($V_{dc}$*), de la tension d'axe de couple ($V_{qc}$*), de la composante d'axe d'excitation magnétique ($I_{dc}$) du courant de moteur, de la composante ($I_{qc}$) orthogonale à l'axe d'excitation magnétique, et les valeurs cibles correspondantes ; et
une unité de commutation de quantité d'écart d'axe qui, lorsque la vitesse de changement de phase de l'axe de superposition (axe p) est devenue supérieure à une valeur définie, commute l'entrée vers l'unité de réglage d'axe d'excitation magnétique (10) de la quantité d'écart d'axe calculée par l'unité de calcul de quantité d'écart d'axe (9) à une quantité d'écart d'axe de région à grande vitesse calculée par l'unité de calcul de quantité d'écart d'axe de région à grande vitesse,
dans lequel l'unité de superposition de tension alternative est configurée pour arrêter la superposition de la tension alternative lorsque la vitesse de changement de phase de l'axe de superposition (axe p) est devenue supérieure à la valeur définie.

**7.** Appareil de commande vectorielle selon la revendication 1, comprenant en outre :

une unité de calcul de quantité d'écart d'axe de région à grande vitesse qui est configurée pour calculer un écart d'axe entre l'axe polaire magnétique (axe d) et l'axe d'excitation magnétique (axe dc) du moteur à partir d'une tension contre-électromotrice du moteur à courant alternatif ; et
une unité de commutation de quantité d'écart d'axe qui est configurée pour, lorsqu'une vitesse de changement de phase de l'axe de superposition (axe p) est devenue supérieure à une valeur définie, commuter l'entrée vers l'unité de réglage d'axe d'excitation magnétique (10) de la quantité d'écart d'axe calculée par l'unité de calcul de quantité d'écart d'axe (9) à une quantité d'écart d'axe de région à grande vitesse calculée par l'unité de calcul de quantité d'écart d'axe de région à grande vitesse,
dans lequel l'unité de superposition de tension alternative est configurée pour arrêter la superposition de la tension alternative lorsque la vitesse de changement de phase de l'axe de superposition (axe p) est devenue supérieure à la valeur définie.

**8.** Appareil de commande vectorielle selon la revendication 6 ou 7,
dans lequel l'unité de commutation de quantité d'écart d'axe est configurée pour commuter l'entrée vers l'unité de réglage d'axe d'excitation magnétique (10) de la sortie de l'unité de calcul de quantité d'écart d'axe de région à grande vitesse à la sortie de l'unité de calcul de quantité d'écart d'axe (9), ensuite :

l'unité de superposition de tension alternative (6) est configurée pour commencer la superposition de tension lorsque la vitesse de changement de phase de l'axe de superposition (axe p) est devenue inférieure à une vitesse définie qui est inférieure à la valeur définie ; et
une période suivante s'est écoulée, la période suivante étant définie sur la base d'une vitesse de réponse à laquelle l'unité de réglage d'axe de superposition (8) fait en sorte que l'axe de superposition (axe p) suive le flux de rotateur du moteur à courant alternatif (1).

**9.** Appareil de commande vectorielle selon la revendication 1 ou 2,
dans lequel la vitesse de réponse à laquelle l'unité de réglage d'axe de superposition (10) fait en sorte que l'axe de superposition (axe p) suive le flux de rotateur du moteur (1) est supérieure à une vitesse de réponse de l'unité de réglage d'axe d'excitation magnétique (10).

**10.** Appareil de commande vectorielle selon la revendication 1 ou 2,
dans lequel l'unité de réglage d'axe de superposition (8) est configurée pour définir une valeur cible de la différence de phase calculée par l'unité de calcul de différence de phase de courant à haute fréquence (7) de sorte que l'axe de superposition (axe p) et l'axe polaire magnétiques (axe d) concordent sensiblement entre eux.

**11.** Appareil de commande vectorielle selon la revendication 1 ou 2,
dans lequel l'unité de réglage d'axe d'excitation magnétique (10) est configurée pour définir la valeur cible de la quantité d'écart d'axe ($\Delta\theta_c$) à une phase d'axe de superposition par rapport à un axe d'excitation magnétique (axe dc) qui est dans un cas où une orbite d'un courant à haute fréquence générée par le courant à haute fréquence concorde sensiblement avec l'axe de superposition (axe p).

**12.** Appareil de commande vectorielle selon la revendication 1 ou 2,
dans lequel la valeur cible de la différence de phase ($\theta_{ivh}$) qui est calculée par l'unité de calcul de différence de phase de courant à haute fréquence (7) et la valeur cible de la quantité d'écart d'axe ($\Delta\theta_c$) sont définies de sorte qu'une direction de superposition de tension dans un état stable devient une direction de phase qui réduit l'ondulation de couple causée par la superposition de la tension alternative.

**13.** Système de commande de moteur (100) présentant un moteur à courant alternatif (1), un convertisseur de puissance (11) qui est configuré pour entraîner le moteur à courant alternatif (1) et un appareil de commande vectorielle selon l'une des revendications précédentes.

FIG.1

EP 2 424 105 B1

FIG.2

EP 2 424 105 B1

## FIG.3

## FIG.4

# FIG.5

# FIG.6

# FIG.7

# FIG.8

AXIS ERROR REFERENCE AMOUNT CHARACTERISTIC

EP 2 424 105 B1

FIG.9

EP 2 424 105 B1

FIG.10

# FIG.11

# FIG.12

FIG.13

EP 2 424 105 B1

## FIG.14

AXIS ERROR REFERENCE AMOUNT CHARACTERISTIC (DURING HIGH LOAD)

EP 2 424 105 B1

FIG.15

EP 2 424 105 B1

FIG.16

# FIG.17

EP 2 424 105 B1

**EP 2 424 105 B1**

**REFERENCES CITED IN THE DESCRIPTION**

**Patent documents cited in the description**

- JP 3312472 B
- JP 2002078392 A
- US 2007046249 A1
- EP 2086106 A2
- JP 2001286198 A